# EUROPÄISCHE PATENTSCHRIFT

(11) **EP 2 051 897 B1**
(45) Veröffentlichungstag und Bekanntmachung des Hinweises auf die Patenterteilung: **26.10.2011**
(21) Anmeldenummer: 07801209.3
(22) Anmeldetag: 02.08.2007
(51) Int. Cl.: B62D 5/09

(54) **HYDRAULISCHE LENKEINRICHTUNG MIT STROMVERSTÄRKUNG UND HYDRAULISCHER SICHERHEITSFUNKTION**
HYDRAULIC STEERING DEVICE HAVING FLOW BOOSTING AND A HYDRAULIC SAFETY FUNCTION
MÉCANISME DE DIRECTION HYDRAULIQUE AVEC AMPLIFICATION DE COURANT ET FONCTIONNEMENT DE SÉCURITÉ HYDRAULIQUE

(30) Priorität: 08.08.2006 DE 102006037030; 19.07.2007 DE 102007033990
(43) Veröffentlichungstag der Anmeldung: 29.04.2009
(73) Patentinhaber: Bosch Rexroth AG, 70184 Stuttgart (DE)
(72) Erfinder: BERGMANN, Erhard, 19079 Mirow (DE); POSCH, Markus, 19417 Klein Labenz (DE); VOSS, Gerhard, 19370 Parchim (DE)
(74) Vertreter: Gulde Hengelhaupt Ziebig & Schneider
(86) Internationale Anmeldenummer: PCT/DE2007/001376
(87) Internationale Veröffentlichungsnummer: WO 2008/017290

(56) Entgegenhaltungen:
- EP-A- 0 725 001
- DE-A1- 10 301 752
- DE-A1-102004 021 531
- US-A1- 2003 051 471

## Beschreibung

Die Erfindung betrifft eine hydraulische Lenkeinrichtung mit Stromverstärkung nach dem Oberbegriff des Anspruchs 1.
Derartige Lenkeinrichtungen werden insbesondere in langsam fahrenden Fahrzeugen mit hohen Achslasten eingesetzt.

Hydrostatische Lenkeinrichtungen bestehen in der Hauptsache aus einem Drehschiebersteuerventil und einer Dosierpumpe. Das Drehschiebersteuerventil wird aus einer äußeren, im Gehäuse eingepassten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad der Dosierpumpe verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und der Dosierpumpe besteht über Kommutatorbohrungen eine hydraulische Verbindung. Die hydraulische Lenkeinrichtung besitzt Anschlüsse für einen Zulauf, einem Rücklauf und für zwei Zylinderleitungen für den Lenkzylinder.
Diese Lenkeinrichtungen zeichnen sich durch ein hohes Verdrängungsvolumen aus, besitzen aber keine Übersetzungsänderung zwischen Servolenkbetrieb und Notlenkbetrieb. Das bedeutet aber, dass die Lenkeinrichtung bei einem möglichen Ausfall der Versorgungspumpe schlagartig auf Notlenkbetrieb umschaltet und damit die gesamte notwendige Lenkkraft manuell am Lenkrad aufgebracht werden muss. Das ist insbesondere im Straßenverkehr ein Sicherheitsrisiko, weil die zulässige Handkraft überschritten wird. Inzwischen sind Lenkeinrichtungen mit einer so genannten Stromverstärkung bekannt, wie sie beispielsweise in der EP 0 725 001 B1 beschrieben ist. Diese Lenkeinrichtung bildet mit allen ihren Steuerleitungen und mit allen Kammern der Dosierpumpe eine Hauptstromleitung zur Verbindung der Versorgungspumpe mit dem Lenkzylinder und zurück zum Tank. Zusätzlich besitzt diese Lenkeinrichtung eine Nebenstromleitung, welche die Dosierpumpe umgeht und dazu vor der Dosierpumpe von der Hauptstromleitung abzweigt und hinter der Dosierpumpe wieder in die Hauptstromleitung einmündet. In der Nebenstromleitung befindet sich ein Stromregelventil, dass hydraulisch von der Druckdifferenz gesteuert wird, die über eine Konstantdrossel abgegriffen wird. Damit stellt sich stets ein zum Hauptstrom proportionaler Nebenstrom ein, wobei beide Ströme zusammen den Lenkölstrom bilden.
Im Servolenkbetrieb fließt der von der Versorgungspumpe bereitgestellte Ölstrom sowohl über die Hauptstromleitung als auch über die geöffnete Nebenstromleitung zum Lenkzylinder. Dagegen ist die Nebenstromleitung im Notlenkbetrieb, also bei Ausfall der Versorgungspumpe, von der Ölstromversorgung abgeschnitten, weil die Eingangsleitung der Lenkeinrichtung wegen des Ausfalls der Versorgungspumpe drucklos geworden ist.
Diese Lenkeinrichtung mit Stromverstärkung ermöglicht ein stufenloses Übersetzungsverhältnis zwischen den Betriebsarten Servolenkbetrieb und Notlenkbetrieb in einer gewünschten Größenordnung. Allerdings ist es von Nachteil, dass diese Lenkeinrichtung eine konstante lineare Abhängigkeit des Lenkförderstromes zur Drehzahl des Lenkrades besitzt und die Größe dieser linearen Abhängigkeit nur auf einen bestimmten Anwendungsfall ausgelegt ist. Damit ist die Einsatzmöglichkeit der betreffenden Lenkeinrichtung nur auf einen speziellen Anwendungsfall eingeschränkt. Eine Anpassung der betreffenden Lenkeinrichtung an einen anderen Anwendungsfall ist nur mit einem erheblichen Umrüstaufwand verbunden.

Aus der DE 103 01 752 A1 ist nun eine gattungsgemäße Lenkeinrichtung mit Stromverstärkung gemäß dem Oberbegriff des Anspruchs 1 bekannt geworden, die in bekannter Weise eine, über die Dosierpumpe führende, Hauptstromleitung und eine, die Dosierpumpe umgehende, Nebenstromleitung ausbildet und die in der Nebenstromleitung ein vom Hauptstrom gesteuertes Stromregelventil besitzt. Zur Steuerung dieses Stromregelventils befindet sich an der Lenkeinrichtung in besonderer Weise einen Messwertaufnehmer zur Erfassung eines vom Hauptstrom abhängigen Messsignals und ein Steuergerät zur Aufnahme, Verarbeitung und Weitergabe des Messsignals an das Stromregelventil in der Nebenstromleitung. Dabei ist das Steuerventil mit verschiedenen Steuergrößen ausgestattet, um verschiedene Proportionalitäten zwischen dem Hauptsstrom und dem Nebenstrom zu erreichen.
Diese Lenkeinrichtung besitzt aber auch Sicherheitseinrichtungen, die dann ansprechen, wenn der oftmals sensible Steuerkreis zwischen dem Hauptstrom und dem Nebenstrom einen Funktionsausfall hat. In diesem Fall sperrt das Stromregelventil den Nebenstrom ab, sodass der Servolenkbetrieb mit einem auf den Hauptstrom reduzierten Lenkvolumen fortgeführt wird.
Diese Lenkeinrichtung hat aber trotzdem ein hohes Sicherheitsrisiko, weil sie keine Lösungen dafür anbietet, wenn der den Nebenstrom steuernde Steuerkreis Fehlfunktionen hat und falsche Steuersignale an das in der Nebenstromleitung befindliche Stromregelventil liefert. Solche Fehlfunktionen treten beispielsweise dann auf, wenn der Nebenstrom zum Hauptstrom entgegengerichtet ist oder wenn der Nebenstrom zum Hauptstrom zwar gleichgerichtet, aber viel zu groß und nicht mehr proportional ist. In diesen Fällen muss der Fahrzeugführer reagieren und diese Fehlfunktionen durch eine veränderte Lenkraddrehzahl ausgleichen. Dieses veränderte Lenkverhalten überfordert den Fahrzeugführer jedoch oftmals. Noch schlimmer ist es, wenn der Nebenstrom in Richtung oder in Gegenrichtung zum Hauptölstrom fließt und dann noch ein größeres Volumen als der Hauptstrom aufweist, oder wenn der Nebenstrom fließt, obwohl das Lenkrad der Lenkeinrichtung nicht betätigt wird. In diesen Fällen kann der Fahrzeugführer die Fehlfunktionen nicht mehr durch abgeänderte Lenkraddrehzahlen ausgleichen und so ist das Fahrzeug nicht mehr beherrschbar.

Der Erfindung liegt daher die Aufgabe zu Grunde, Fehlfunktionen bei der gattungsgemäßen Lenkeinrichtung zu vermeiden.
Erfindungsgemäß wird diese Aufgabe durch eine Lenkeinrichtung mit den im Anspruch 1 genannten Merkmalen gelöst. Dadurch, dass das Stromregelventil (20) über zwei hydraulische Steuerleitungen (38, 39) von zwei elektrisch steuerbaren Stellventilen (36, 37) aus ansteuerbar ist, wobei die nicht der jeweiligen Lenkrichtung entsprechende hydraulische Steuerleitung (38, 39) unabhängig von dem jeweiligen Stellventil (36, 37) über eine Entlastungsleitung (40, 41) mit einem Tank (12) verbindbar ist, ist vorteilhaft möglich, dass nur immer die Seite des Stromregelventils ein Steuersignal erhält, die zur Lenkrichtung des Handlenkrades übereinstimmt. Damit wird in vorteilhafter Weise vermieden, dass der Nebenölstrom durch eine Fehlfunktion des elektrischen Steuerkreises in Gegenrichtung zum Hauptölstrom wirkt. Das erhöht die Sicherheit der Lenkeinrichtung. Dabei ist es zweckmäßig, wenn die beiden zum Stromregelventil der Nebenstromleitung führenden Steuerleitungen Hydraulikleitungen sind und in diesen hydraulischen Steuerleitungen elektrisch steuerbare Stelleinheiten eingesetzt sind und die nichtaktive der beiden Steuerleitungen zwischen dem Stellventil und dem Stromregelventil über eine Entlastungsleitung mit dem Tank verbunden ist. Um zu gewährleisten, dass nur die nichtaktive Steuerleitung mit dem Tank verbunden ist, ist es von Vorteil, wenn die Entlastungsleitungen der beiden Stelleinheiten über das Drehschiebersteuerventil der Lenkeinrichtung geführt werden. Dann kann die nichtaktive Steuerleitung in einfacher Weise durch das Drehschiebersteuerventil bestimmt und mit der Rücklaufleitung des Lenkventils verbunden werden.
Es kann aber auch von Vorteil sein, wenn in den Steuerleitungen zwischen den Stellventilen und dem Dreistellungs-Stromregelventil jeweils ein elektrisch schaltbares Entlastungsventil angeordnet ist und jedes Entlastungsventil ablaufseitig mit dem Tank und steuerseitig mit einem Messwertaufnehmer verbunden ist, wobei dar Messwertaufnehmer in geeigneter Weise mit dem Lenkventil gekoppelt ist. Dann können die Auswahl der nichtaktiven Steuerleitung und die Schaltung des zutreffenden Entlastungsventils durch einen elektrischen Steuerkreis erfolgen. Ein weiterer Vorteil dieser Ausführung besteht auch darin, dass die sonst erforderlichen Steuerkanäle in dem Lenkventil überflüssig werden und unnötig lange Hydraulikleitungen zwischen dem Lenkventil und dem Stromregelventil eingespart werden.
Vorteilhaft ist es auch, wenn in der Zulaufleitung der Nebenstromleitung ein vom Volumenstrom zum Lenkventil der Hauptstromleitung gesteuertes und aus einer Sperrstellung in eine geregelte Offenstellung verstellbares Strombegrenzungsventil eingesetzt wird. Damit wird verhindert, dass durch eine Fehlfunktion des elektrischen Steuerkreises der Nebenölstrom eine unvertretbare Größe einnimmt und das Fahrzeug vom Fahrzeugfiihrer nicht mehr durch ein entsprechendes Gegenlenken beherrschbar wird. Das erhöht die Fahrzeugsicherheit.
Zur Erhöhung der Sicherheit trägt auch bei, wenn in der Rücklaufleitung der Nebenstromleitung hinter dem Stromregelventil ein schaltbares Sperrventil angeordnet ist, dass die Rücklaufleitung bei der normalen Funktion absperrt. Das verhindert die Fehlfunktion einer falsch gesteuerten Betätigung des Nebenölstromes, ohne dass das Lenkventil in der Hauptstromleitung aktiviert ist. Dabei ist es zweckmäßig, wenn das schaltbare Sperrventil vom Rücklaufdruck des Nebenölstromes betätigt wird und bei einem vorbestimmten Rücklaufdruck öffnet. Das ist immer dann von Vorteil, wenn mit einer relativ hohen Stromverstärkung gelenkt wird und der dabei vom Lenkzylinder zurückgeführte volumenstarke Rückölstrom nicht allein von den Rücklaufleitungen und Rücklaufkanälen des Lenkventils verkraftet werden kann. Mit der Öffnung des Sperrventils in der Nebenstromleitung nehmen auch diese Rücklaufleitungen an der Rückführung des Lenkölstromes teil und entlasten damit das Lenkventil in der Hauptstromleitung. Damit das Sperrventil vom Rücklaufdruck des Nebenölstromes betätigt werden kann, muss vorher die Steuerleitung durch ein weiteres Sperrventil geöffnet werden. Dieses Sperrventil wird direkt durch das Lenkventil angesteuert und öffnet erst dann, wenn das Handlenkrad des Lenkventils betätigt wird.
Es ist für die Lenksicherheit auch von Vorteil, wenn in der Rücklaufleitung der Nebenstromleitung hinter dem Stromregelventil ein schaltbares Sperrventil angeordnet ist, dass von einem zweiten Bediengerät aus seiner Sperrstellung in eine Offenstellung verstellbar ist. Auch dieses Sperrventil verhindert mit seiner gesperrten Grundstellung, dass bei einer Fehlsteuerung des Steuerkreises ein Nebenölstrom fließen und den Lenkzylinder verstellen kann. Dabei kann diese Sperrstellung durch ein zweites Bediengerät aufgehoben werden, sodass eine Lenkbewegung allein über den Nebenölstrom ermöglicht wird.
Es ist natürlich auch von Vorteil, wenn sowohl das vom Rücklauf gesteuerte Sperrventil als auch das von dem zweiten Bediengerät gesteuertes Sperrventilgemeinsam und in paralleler Anordnung verwendet werden. Das erhöht wiederum die Fahrsicherheit.
Die neue Lenkeinrichtung beseitigt damit alle genannten Nachteile des Standes der Technik und ist darüber hinaus einfach und unkompliziert in der Herstellung und der Anwendung.

Die Erfindung soll anhand eines Ausführungsbeispieles näher erläutert werden.
Dazu zeigen:
- Fig. 1:: einen Schaltplan des Anmeldegegenstandes mit einer Entlastung der Steuerleitungen des Stromregelventils in der Nebenstromleitung über das Steuerventil des Lenkventils der Hauptstromleitung,
- Fig. 2:: ein vergrößerte Darstellung des Steuerventils des Lenkventils und
- Fig. 3:: einen Schaltplan des Anmeldegegenstandes mit einer direkten Entlastung der Steuerleitungen des Stromregelventils in der Nebenstromleitung.

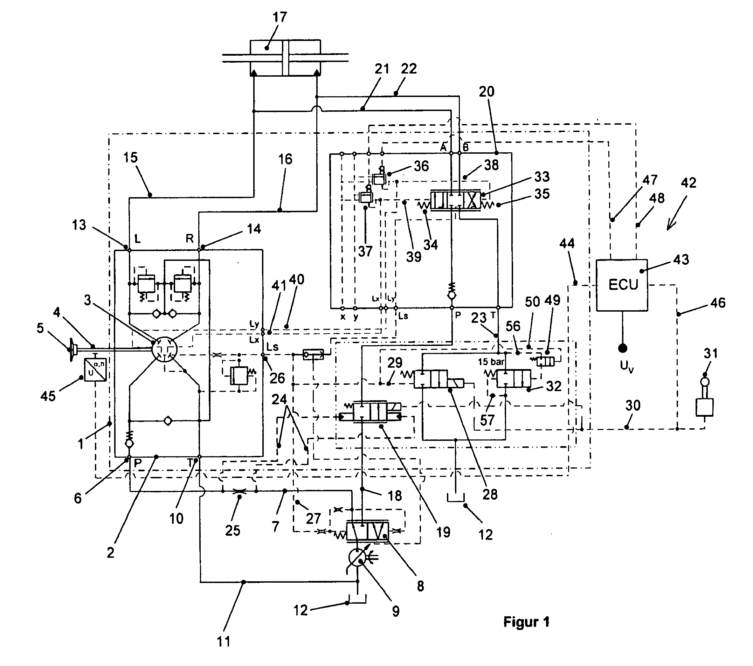

Der Lenkkreislauf gemäß der Fig. 1 zeigt eine Lenkeinrichtung 1 mit einem Lenkventil 2. Das Lenkventil 2 besitzt eine drehschiebergesteuerte Dosierpumpe 3, die über ein Lenkgestänge 4 mit einem Handlenkrad 5 verbunden ist. Das Lenkventil 2 besitzt weiterhin einen Zulaufanschluss 6, der über eine erste Zulaufleitung 7 und über einem, den Förderstrom der Versorgungspumpe 9 vorrangig zum Lenkventil 2 führendes Stromteilventil 8 mit einer Versorgungspumpe 9 verbunden ist, und einen Rücklaufanschluss 10, die über eine Rücklaufleitung 11 zu einem Tank 12 führt.

Das Lenkventil 2 weist außerdem zwei Zylinderanschlüssen 13 und 14 auf, die beide über Zylinderleitungen 15, 16 mit einem Lenkzylinder 17 verbunden sind und die jeweils für eine der beiden Lenkrichtungen zuständig sind.
Damit bildet sich von der Versorgungspumpe 9 über das Stromteilventil 8, der Dosierpumpe 3 des Lenkventils 2 zum Lenkzylinder 17 und vom Lenkzylinder 17 zurück über die Dosierpumpe 3 des Lenkventils 2 zum Tank 12 eine Hauptstromleitung aus.
Von dem Stromteilventil 8 zweigt eine zweite Zulaufleitung 18 ab, die über ein in der Ausgangsstellung vorzugsweise gesperrtes Strombegrenzungsventil 19, einem Stromregelventil 20 und eine von zwei Zylinderleitungen 21 bzw. 22 ebenfalls zum Lenkzylinder 17 führt. Der Rücklauf vom Lenkzylinder 17 zum Tank 12 erfolgt wiederum über eine der beiden Zylinderleitungen 21 bzw. 22, dem Stromregelventil 20 und der Rücklaufleitung 23. Das in der Zulaufleitung 18 der Nebenstromleitung befindliche Strombegrenzungsventil 19 besitzt beidseitige Steuerleitungen 24, die zu einer in der ersten Zulaufleitung 7 der Hauptstromleitung befindlichen Konstantdrossel 25 führen, sodass das Strombegrenzungsventil 19 von der Druckdifferenz über der Konstantdrossel 25 aus seiner Sperrstellung oder einer definierten Offenstellung in eine bestimmte Offenstellung gesteuert wird. Damit besteht auf diesem Wege eine von der Versorgungspumpe 9 zum Lenkzylinder 17 und zurück zum Tank 12 führende Nebenstromleitung. Das Strombegrenzungsventil 19 kann aber auch durch ein zweites Bediengerät 31 aus seiner Sperrstellung oder einer definierten Offenstellung in eine bestimmte Offenstellung gesteuert werden.
Zur Gewährleistung einer vorrangigen Versorgung des über das Lenkventil 2 führenden Hauptölstromes durch die Versorgungspumpe 9 besitzt das Lenkventil 2 einen Lastsignalanschluss 26, der über eine Steuerleitung 27 mit dem Stromteilventil 8 verbunden ist und damit bei Bedarf zunächst immer die vorrangige Versorgung des Lenkventils 2 mit Öl steuert.

In der Rücklaufleitung 23 der Nebenstromleitung zwischen dem Strombegrenzungsventil 20 und dem Tank 12 ist in besonderer Weise ein erstes schaltbares Sperrventil 28 angeordnet, das einerseits über eine Steuerleitung 29 mit dem Lastsignalanschluss 26 des Lenkventils 2 in der Hauptstromleitung verbunden ist und damit in seine Sperrstellung gehalten wird und das andererseits über eine Steuerleitung 30 mit dem zweiten Bediengerät 31 in Verbindung steht und damit in seine Offenstellung verschoben wird. Dabei kann das zweite Bediengerät 31 ein Joystick oder eine Spurführung oder ein anderer externer Sollwertgeber sein.

Ebenfalls in der Rücklaufleitung 23 und zwar parallel zum schaltbaren Sperrventil 28 befindet sich ein zweites schaltbares Sperrventil 32, dass in seiner Ausgangsstellung geschlossen ist und das über eine Steuerleitung 56 vom Druck in der Rücklaufleitung 23 in seine Offenstellung schaltbar ist. Dabei ist das schaltbare Sperrventil 32 auf einen geringen Öffnungsdruck eingestellt, der vorzugsweise etwa 15 bar beträgt. In der Steuerleitung 56 befindet sich ein Freischaltventil 49, das über eine Steuerleitung 50 mit dem Lastsignalanschluss 26 des Lenkventils 2 verbunden ist und das mit Hilfe des Lastsignals aus seiner Sperrstellung in seine Offenstellung steuerbar ist. In dieser Offenstellung ist die zum schaltbaren Sperrventil 32 führende Steuerleitung 56 frei geschaltet, sodass das schaltbare Sperrventil 32 öffnet und die Rücklaufleitung 23 freigibt.

Das Stromregelventil 20 in der Nebenstromleitung ist vorzugsweise als ein Dreistellungs-Stromregelventil 33 ausgelegt, das eine geschlossene Mittelstellung und zwei gegenüberliegende Arbeitsstellungen besitzt, in denen ein geregelter Zulaufstrom und ein ungedrosselter Rücklauf ermöglicht wird. Das Dreistellungs-Stromregelventil 33 besitzt zu beiden Seiten je eine Rückstellfeder 34, 35 zum Halten und zur Rückführung des Regelkolbens des Dreistellungs-Stromregelventils 33 in die geschlossene Mittelstellung und beiderseits je ein hydraulisches und elektrisch steuerbares Stellventil 36, 37 zum Auslenken des Dreistellungs-Stromregelventils 33 in eine der beiden Offenstellungen. Dabei befinden sich die beiden Stellventile 36, 37 in zwei Steuerleitungen 38, 39, die mit einer internen oder externen Steuersignalversorgungseinrichtung verbunden sind. Jede dieser beiden Steuerleitungen 38, 39 ist in den beiden Bereichen zwischen dem Stellventil 36, 37 und dem Dreistellungs-Stromregelventil 33 über jeweils eine Entlastungsleitung 40, 41 in besonderer Weise mit dem Lenkventil 2 verbunden. Dabei ist stets die der Lenkrichtung gegenüberliegende Steuerleitung 38, 39 über Steuerkanäle der Dosierpumpe 3 mit der zum Tank 12 führenden Rücklaufleitung 11 des Lenkventils 2 verbunden. Damit ist diese für die Lenkbewegung nicht aktive Steuerleitung 38, 39 stets drucklos.

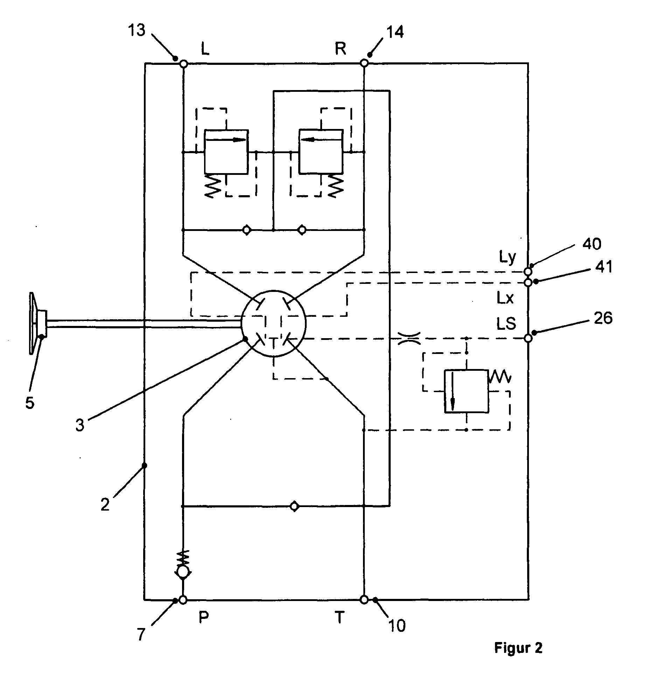

Die Fig. 2 zeigt in einer vergrößerten Darstellung die Verbindung der beiden Steuerleitungen 38, 39 mit der jeweiligen Rücklaufleitung 11 des Lenkventils 2.

Zur steuertechnischen Verknüpfung des Hauptölstromes mit dem Nebenölstromes ist in bekannter Weise ein Steuerkreis 42 vorgesehen. Dieser Steuerkreis 42 ist beispielsweise elektronisch ausgelegt und besitzt daher ein elektronisches Steuergerät 43. Dieses Steuergerät 43 ist eingangsseitig über eine erste Steuerleitung 44 mit einem, mit dem Lenkventil 2 der Hauptstromleitung gekoppelten Messwertaufnehmer 45 und über eine zweite Steuerleitung 46 mit dem zweiten Bediengerät 31 verbunden. Dabei kann der Messwertaufnehmer 45 ein Drehwinkelsensor sein, der am Lenkgestänge 4 des Handlenkrades 5 angeordnet ist und der als Messgröße den eingeschlagenen Drehwinkel und die entsprechende Drehgeschwindigkeit sowie die Drehrichtung des Handlenkrades 2 ermittelt. Der Messwertaufnehmer 45 kann aber auch ein Volumenstromsensor sein, der den Volumenstrom vor der Dosierpumpe 3 des Lenkventils 2 aufnimmt. Der Messwertaufnehmer 45 kann aber auch eine Kombination von beiden Ausführungen sein. Ausgangsseitig besitzt das Steuergerät 43 zwei Steuerleitungen 47, 48, die zu den Stellventilen 36, 37 des Dreistellungs-Stromregelventils 33 in der Nebenstromleitung führen.

Nicht dargestellt ist eine Möglichkeit, das Steuergerät 43 weiterhin mit einer eingangsseitigen Steuerleitung auszustatten, die das Steuergerät 43 mit einem am Dreistellungs-Stromregelventil oder am Lenkzylinder 17 befindlichen Wegsensor verbindet. Damit kann die eingeleitete Lenkbewegung am Lenkzylinder mit den abgegebenen Steuersignalen verglichen und abgeklärt werden.

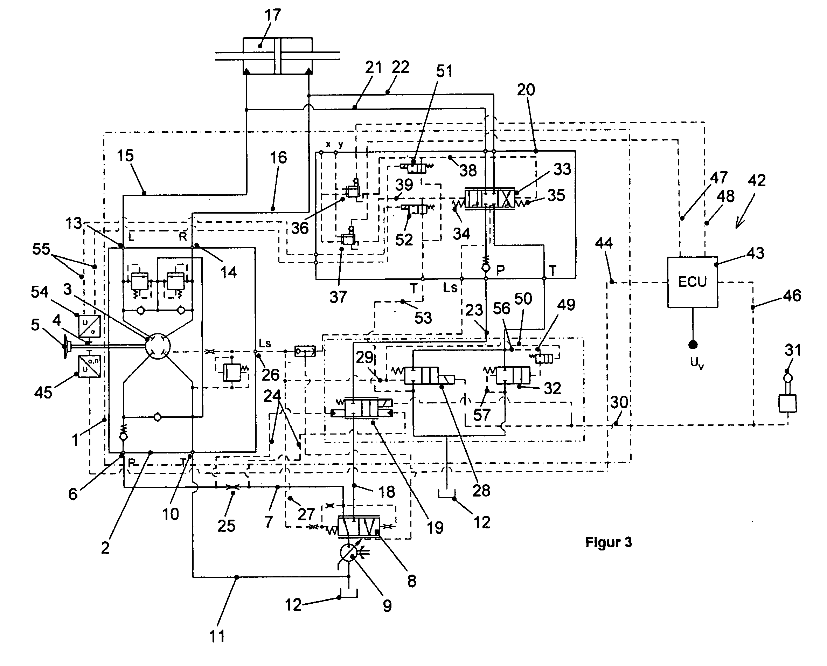

Die Lenkeinrichtung 1 gemäß der Fig. 3 unterscheidet sich gegenüber der Lenkeinrichtung 1 nach der Fig. 1 durch eine besondere Ausführung des Stromregelventils 20 in der Nebenstromleitung. An Stelle der beiden zum Lenkventil 2 der Hauptstromleitung führenden Entlastungsleitungen 40, 41 aus der Fig. 1 sind bei dieser Ausführung in jeder der beiden Steuerleitungen 38, 39 zwischen den Stellventilen 36, 37 und dem Dreistellungs-Stromregelventil 33 jeweils ein schaltbares Entlastungsventil 51, 52 eingesetzt, deren Stelleinheiten jeweils über eine Steuerleitung 55 mit einem zweiten Messwertaufnehmer 54 verbunden sind. Dabei ist stets das der Lenkrichtung gegenüberliegende Entlastungsventil 51 1 bzw. 52 über eine Rücklaufleitung 53 direkt mit dem Tank 12 verbunden. Damit ist diese für die Lenkbewegung nicht aktive Steuerleitung 38 bzw. 39 stets drucklos. Der Messwertaufnehmer 54 kann dabei ein Drehwinkelsensor sein, der am Lenkgestänge 4 des Handlenkrades 5 angeordnet ist und der als Messgröße die Drehrichtung des Handlenkrades 5 ermittelt. Weiterhin kann der Messwertaufnehmer 54 aber auch ein Volumenstromsensor sein, der den Volumenstrom vor der Dosierpumpe 3 des Lenkventils 2 ermittelt. Der Messwertaufnehmer 54 kann aber auch eine Kombination von beiden Ausführungen sein.

Die neue Lenkeinrichtung mit Stromverstärkung hat gemäß der Ausführung nach der Fig. 1 folgende Funktion.
In der nichtbetätigten Neutralstellung ist das Lenkventil 2 der Lenkeinrichtung 1 geschlossen. Das Dreistellungs-Stromregelventil 33 in der Nebenstromleitung befindet sich durch die Kräfte der Rückstellfedern 34, 35 in der geschlossenen Mittelstellung, weil die Stelleinheiten 36, 37 kein Steuersignal haben. Das Gleiche gilt für das Strombegrenzungsventil 19, sodass auch kein Nebenölstrom fließen kann.
Im Servolenkbetrieb kommt es durch die Betätigung des Handlenkrades 5 innerhalb des Lenkventils 2 der Lenkeinrichtung 1 zur Auslenkung eines zur Dosierpumpe 3 gehörenden Drehschiebersteuerventils und damit zum Öffnen entsprechender verstellbarer Drosseln. Das von der Versorgungspumpe 9 gelieferte Öl gelangt dabei über die erste Zulaufleitung 7 zur Dosierpumpe 3, wo es als Hauptölstrom dosiert und in dieser abgemessenen Menge über die Zylinderleitungen 15 bzw. 16 zum Lenkzylinder 17 befördert wird. Beim Durchströmen des Lenkventils 2 wird dem Hauptölstrom ein belastungsabhängiges Lastsignal abgenommen und über die Steuerleitung 27 dem Stromteilventil 8 als Steuersignal zugetragen. Dadurch schwenkt das Stromteil 8 aus und nimmt seine stromteilende Regelstellung ein. Gleichzeitig belastet die Druckdifferenz über der in der Hauptstromleitung befindlichen Konstantdrossel 25 das in der Nebenstromleitung befindliche Strombegrenzungsventil 19 und verschiebt es in seine Offenstellung. Ebenfalls gleichzeitig ermittelt der Messwertaufnehmer 45 den entsprechenden Messwert für die Zustandsveränderung im Lenkventil 2 und liefert ihn an das Steuergerät 43, wo es bewertet und in ein Steuersignal für das Dreistellungs-Stromregelventil 33 umgewandelt wird. Dieses Steuersignal belastet eines der beiden Stellventile 36, 37 und öffnet es, wodurch das interne oder externe Steuersignal in der entsprechenden Steuerleitung 38, 39 den Regelkolben des Dreistellungs-Stromregelventils 33 belastet und ihn entgegen der Kraft der Rückstellfeder 34, 35 in seine Regelstellung verschiebt. In dieser Regelstellung stellt sich ein definierter Öffnungsquerschnitt ein, der einen zum Hauptölstrom proportionalen Nebenölstrom liefert. Dieser Nebenölstrom gelangt über die entsprechende Zylinderleitung 21, 24 zum Lenkzylinder 17. Die andere Steuerleitung 38, 39 am Dreistellungs-Stromregelventil 33 ist über die Entlastungsleitung 40, 41 und über das Lenkventil 2 mit dem Tank 12 verbunden und damit drucklos.
Mit diesen Einstellungen gelangen von der Versorgungspumpe 9 ein Hauptölstrom über das Lenkventil 2 und ein Nebenölstrom über das Stromregelventil 20 als ein verstärkter Lenkölstrom zum Lenkzylinder 17, wodurch die am Lenkzylinder 17 befestigten Räder einschlagen. Dabei erfolgt der Einschlag der Räder in einer linearen Abhängigkeit von der Drehzahl der Lenkbetätigung am Handlenkrad 2. Das durch den Einschlag der Räder verdrängte Öl wird allein über das Lenkventil 2 und der Rücklaufleitung 11 in den Tank 12 zurück befördert, weil die entsprechenden schaltbaren Sperrventile 28, 32 in ihrer Grundstellung geschlossen sind. Erst bei einer großen Stromverstärkung und wenn sich in der Rücklaufleitung 11 im Hauptstromweg ein durch die begrenzten Querschnitte begründeter Durchflusswiderstand in der Höhe von etwa 15 bar einstellt, schaltet das Sperrventil 32 frei, sodass dann auch der Rückfluss über die Nebenstromleitung ermöglicht wird.

Für den Fall, dass die Lenkeinrichtung 1 an Stelle des Handlenkrades 5 des Lenkventils 2 mit dem zweiten Bediengerät 31 gelenkt werden soll, befindet sich das Lenkventil 2 in der gesperrten Mittelstellung. In dieser Situation ist kein Lastsignal vorhanden, das das Stromteilventil 8 und das schaltbare Sperrventil 28 belastet. Dadurch kommt das Stromteilventil 8 durch seine Federbelastung in seine Regelstellung, in der auch die Nebenstromleitung beliefert wird und das schaltbare Sperrventil 28 kommt in seine Offenstellung, weil es über die Steuerleitung 30 von dem Steuersignal des zweiten Bediengerätes 31 belastet wird. Gleichzeitig wird das vom zweiten Bediengerät 31 gelieferte Steuersignal über die zweite Steuerleitung 46 auf das Steuergerät 43 übertragen, wo es in ein Steuersignal für die Stelleinheiten 36, 37 des Dreistellungs-Stromregelventils 33 umgewandelt wird. So fließt allein ein Nebenölstrom von der Versorgungspumpe 9 über das Stromteilventil 8, das geöffnete Strombegrenzungsventil 19 und das in Regelstellung befindliche Dreistellungs-Stromregelventil 33 zum Lenkzylinder 17 und wieder über das Dreistellungs-Stromregelventil 33 und das geöffnete schaltbare Sperrventil 28 zum Tank 12.

Bei einem Ausfall der Versorgungspumpe 9 wird die Zulaufleitung 11 des Lenkventils 2 drucklos und es stellt sich automatisch der Notlenkbetrieb ein. Dabei wird der erforderliche Lenkölstrom allein durch die von der Handkraft angetriebenen Dosierpumpe 3 angesaugt und dem Lenkzylinder 17 je Umdrehung mit einem verminderten Lenkvolumen zur Verfügung gestellt. Dabei verhindert die geschlossene Mittelstellung des Dreistellungs-Stromregelventil 33 eine drucklose Rückführung des Notlenkölstromes über das Dreistellungs-Stromregelventils 33 in den Tank 12.
Bei einem Ausfall des Steuerkreises 42 fehlt es an den erforderlichen Steuersignalen für die elektrischen Stellventile 36, 37 des Dreistellungs-Stromregelventils 33, wodurch der Regelkolben des Dreistellungs-Stromregelventils 33 durch die Kräfte der beiden Rückstellfedern 34, 35 seine geschlossene Mittelstellung ein. Damit sind der Nebenölstrom und damit die Stromverstärkung unterbrochen. Der Lenkbetrieb bleibt aber erhalten, weil die Versorgung des Lenkzylinders 17 über den durch das Lenkventil 2 geführten Hauptölstrom gewährleistet bleibt. Durch das verringerte Lenkvolumen macht sich am Handlenkrad 5 lediglich eine Erhöhung der erforderlichen Lenkraddrehzahl erforderlich, was ohne weiteres im Grenzbereich des Erlaubten liegt.

Neben diesem Ausfall des Steuerkreises 42 sind die verschiedensten Fehlfunktionen des Steuerkreises 42 denkbar, die zu einem unbeherrschbaren Zustand der gesamten Lenkeinrichtung 1 führen können. Mit der besonderen Ausführung des Stromregelventils 20 und dem Strombegrenzungsventil 19 in der Zulaufleitung 18 des Nebenölstromes und den schaltbaren Sperrventilen 28 und 32 in der Rücklaufleitung 23 der Nebenölstromes werden diese Fehlfunktionen ausgeglichen.

### Liste der Bezugszeichen

- 1: Lenkeinrichtung
- 2: Lenkventil
- 3: Dosierpumpe
- 4: Lenkgestänge
- 5: Handlenkrad
- 6: Zulaufanschluss
- 7: erste Zulaufleitung
- 8: Stromteilventil
- 9: Versorgungspumpe
- 10: Rücklaufanschluss
- 11: Rücklaufleitung
- 12: Tank
- 13: Zylinderanschluss
- 14: Zylinderanschluss
- 15: Zylinderleitung
- 16: Zylinderleitung
- 17: Lenkzylinder
- 18: zweite Zulaufleitung
- 19: Strombegrenzungsventil
- 20: Stromregelventil
- 21: Zylinderleitung
- 22: Zylinderleitung
- 23: Rücklaufleitung
- 24: Steuerleitung
- 25: Konstantdrossel
- 26: Lastsignalanschluss
- 27: Steuerleitung
- 28: schaltbares Sperrventil
- 29: Steuerleitung
- 30: Steuerleitung
- 31: zweites Bediengerät
- 32: schaltbares Sperrventil
- 33: Dreistellungs-Stromregelventit
- 34: Rückstellfeder
- 35: Rückstellfeder
- 36: Stellventil
- 37: Stellventil
- 38: Steuerleitung
- 39: Steuerleitung
- 40: Entlastungsleitung
- 41: Entlastungsleitung
- 42: Steuerkreis
- 43: Steuergerät
- 44: erste Steuerleitung
- 45: Messwertaufnehmer
- 46: zweite Steuerleitung
- 47: Steuerleitung
- 48: Steuerleitung
- 49: Freischaltventil
- 50: Steuerleitung
- 51: Entlastungsventil
- 52: Entlastungsventil
- 53: Rücklaufleitung
- 54: Messwertaufnehmer
- 55: Steuerleitung
- 56: Steuerleitung

## Patentansprüche

1. Lenkeinrichtung mit Stromverstärkung und hydraulischen Sicherheitsfunktionen, bestehend aus einem Lenkventil (2), das zwischen einer Versorgungspumpe (9) und einem Lenkzylinder (17) eine Hauptstromleitung ausbildet, und einem Stromregelventil (20), das zwischen der Versorgungspumpe (9) und dem Lenkzylinder (17) eine die Hauptstromleitung umgehende Nebenstromleitung ausbildet, wobei das Stromregelventil (20) der Nebenstromleitung über einen elektrischen Steuerkreis (42) von mindestens einem betätigungsabhängigen Parameter der Hauptstromleitung steuerbar ist, **dadurch gekennzeichnet, dass** das Stromregelventil (20) über zwei hydraulische Steuerleitungen (38, 39) von zwei elektrisch steuerbaren Stellventilen (36, 37) aus ansteuerbar ist, wobei die nicht der jeweiligen Lenkrichtung entsprechende hydraulische Steuerleitung (38, 39) unabhängig von dem jeweiligen Stellventil (36, 37) mit einem Tank (12) verbindbar ist.

2. Lenkeinrichtung nach Anspruch 1, **dadurch gekennzeichnet, dass** die hydraulischen Steuerleitungen (38, 39) über jeweils eine Entlastungsleitung (40,41) mit dem Tank (12) verbunden sind.

3. Lenkeinrichtung nach Anspruch 2,
**dadurch gekennzeichnet, dass** die Entlastungsleitungen (40, 41) über das Steuerventil der Dosierpumpe (3) im Lenkventil (2) geführt werden.

4. Lenkeinrichtung nach Anspruch 1,
**dadurch gekennzeichnet, dass** an die Steuerleitung (38, 39) ein elektrisch steuerbares Entlastungsventil (51, 52) angeschlossen ist, das über eine Rücklaufleitung (53) mit dem Tank (12) verbunden ist.

5. Lenkeinrichtung nach Anspruch 1,
**dadurch gekennzeichnet, dass** in der Zulaufleitung (18) der Nebenstromleitung ein vom Volumenstrom zum Lenkventil (2) der Hauptstromleitung gesteuertes und verstellbares Strombegrenzungsventil (19) eingesetzt ist.

6. Lenkeinrichtung nach Anspruch 5,
**dadurch gekennzeichnet, dass** der Volumenstrom der Nebenstromleitung von der Druckdifferenz über eine in der Zulaufleitung (7) der Hauptstromleitung befindlichen Konstantdrossel (25) bestimmt wird.

7. Lenkeinrichtung nach Anspruch 1,
**dadurch gekennzeichnet, dass** in der Rücklaufleitung (23) der Nebenstromleitung hinter dem Stromregelventil (20) ein schaltbares Sperrventil (32) angeordnet ist, das von einem vorbestimmten Rücklaufdruck des Nebenölstroms aus seiner Sperrstellung in eine Offenstellung verstellbar ist.

8. Lenkeinrichtung nach Anspruch 7,
**dadurch gekennzeichnet, dass** in der zum schaltbaren Sperrventil (32) führenden Steuerleitung (56) ein Freischaltventil (49) angeordnet ist, das vom Lastsignal des Lenkventils (2) von einer Sperrstellung in eine Offenstellung schaltbar ist.

9. Lenkeinrichtung nach Anspruch 1,
**dadurch gekennzeichnet, dass** in der Rücklaufleitung (23) der Nebenstromleitung hinter dem Stromregelventil (20) ein schaltbares Sperrventil (28) angeordnet ist, das von einem zweiten Bediengerät (31) aus seiner Sperrstellung in eine Offenstellung verstellbar ist.

10. Lenkeinrichtung nach den Ansprüchen 8 und 9,
**dadurch gekennzeichnet, dass** das vom Rücklaufdruck gesteuerte Sperrventil (32) und das vom zweiten Bediengerät (31) gesteuerte Sperrventil (28) gemeinsam eingesetzt und parallel zueinander angeordnet sind.

## Claims

1. Steering device having a flow boosting and hydraulic safety functions, consisting of a steering valve (2) that forms a main flow line between a supply pump (9) and a steering cylinder (17), and a flow regulating valve (20) that forms a secondary flow line avoiding the main flow line between the supply pump (9) and the steering cylinder (17), wherein the flow regulating valve (20) of the secondary flow line can be controlled via an electric control circuit (42) by at least one parameter of the main flow line that is independent from actuation, **characterised in that** the flow regulating valve (20) can be driven via two hydraulic control lines (38, 39) from two electrically controllable adjusting valves (36, 37), wherein the hydraulic control line (38, 39) which does not correspond to the respective steering direction can be connected to a tank (12) independently from the respective adjusting valve (36,37).

2. Steering device according to claim 1, **characterised in that** the hydraulic control lines (38, 39) are connected to the tank (12) via respectively one relief line (40, 41),

3. Steering device according to claim 2,
**characterised in that** the relief lines (40, 41) are guided via the control valve of the metering pump (3) in the steering valve (2).

4. Steering device according to claim 1,
**charactersed in that** an electrically controllable relief valve (51, 52) is connected to the control line (38, 39) which is connected to the tank (12) by a return line (53).

5. Steering device according to claim 1,
**characterised in that** a flow limiting valve (19) controlled and adjustable by the volume flow to the steering valve (2) of the main flow line is inserted in the inflow line (18) of the secondary flow line.

6. Steering device according to claim 5,
**characterised in that** the volume flow of the secondary flow line is determined by the pressure difference via a constant throttle (25) located in the inflow line (7) of the main flow line.

7. Steering device according to claim 1,
**characterised in that** a switchable lock valve (32) that can be adjusted from its locked position to an open position by a predetermined return pressure of the secondary oil flow is disposed in the return line (23) of the secondary flow line behind the flow regulating valve (20),

8. Steering device according, to claim 7,
**characterised in that** an unloading valve (49) that can be switched from a locked position to an open position by the load signal of the steering valve (2) is disposed in the control line (56) leading to the switchable lock valve (32).

9. Steering device according to claim, 1,
**characterised in that** a switchable lock valve (28) that can be adjusted from its locked position to an open position by a second operator device (31) is disposed in the return line (23) of the secondary flow line behind the flow regulating valve (20),

10. Steering device according to claims 8 and 9,
**characterised in that** the lock valve (32) controlled by the return pressure and the lock valve (28) controlled by the second operator device (31) are employed together and are disposed in parallel.

## Revendications

1. Mécanisme de direction avec amplification de courant et des fonctions de sécurité hydraulique, consistant en une soupape (2) de direction qui forme une conduite de courant principal entre une pompe (9) d'alimentation et un cylindre (17) de direction, et en une soupape (20) de régulation du courant qui forme une conduite de courant secondaire évitant là conduite de courant principal entre la pompe (9) d'alimentation et le cylindre (17) de direction, la soupape (20) de régulation du courant de la soupape de courant secondaire pouvant être commandée par au moins un paramètre indépendant de l'actionnement, un circuit (42) électrique de commande, **caractérisé en ce que** la soupape (20) de régulation du courant peut être commandée à partir de deux soupapes (36, 37) de réglage via deux conduites (38, 39) de commande hydraulique, la conduite (38, 39) de commande hydraulique qui ne correspond pas au sens de direction respectif pouvant être reliée à un réservoir (12) indépendamment de la soupape (36, 37) de réglage respective,

2. Mécanisme de direction selon la revendication 1, **caractérisé en ce que** les conduites (38, 39) de commande hydraulique sont reliées au réservoir (12) par une conduite (40, 41) d'échappement, respectivement,

3. Mécanisme de direction selon la revendication 2,
**caractérisé en ce que** les conduites (,40, 41) d'échappement sont guidées via la soupape de commande de la pompe (3) de dosage dans la soupape (2) de direction.

4. Mécanisme de direction selon la revendication 1,
**caractérisé en ce qu'**une soupape (51, 52) d'échappement qui peut être commandée électriquement est reliée à la conduite (38, 39) de commande qui est reliée au réservoir (12) par une conduite (53) de retour.

5. Mécanisme de direction selon la revendication 1,
**caractérisé en ce qu'**une soupape (19) de limitation du courant commandée et ajustable par le courant de volume jusqu'à la soupape (2) de direction de la conduite du courant principal est insérée dans la conduite (18) d'amenée de la conduite de courant secondaire.

6. Mécanisme de direction selon la revendication 5,
**caractérisé en ce que** le courant de volume de la conduite de courant secondaire est déterminé par la différence de pression via une soupape (25) de décompression située dans la conduite (7) d'amenée de la conduite de courant principal.

7. Mécanisme de direction selon la revendication 1,
**caractérisé en ce qu'**une soupape (32) d'arrêt commutable pouvant être ajustée, par une pression de retour prédéterminée du courant d'huile secondaire, de manière à venir de sa position bloquée dans une position d'ouverture, est disposée dans la conduite (23) de retour de la conduite de courant secondaire, derrière la soupape (20) de régulation du courant.

8. Mécanisme de direction selon la revendication 7,
**caractérisé en ce qu'**une soupape (49) de décharge pouvant être commutée, par le signal de charge de la soupape (2) de direction, de manière à venir d'une position bloquée dans une position d'ouverture,est disposée dans la conduite (56) de commande menant à la soupape (32) d'arrêt commutable.

9. Mécanisme de direction selon la 1,
**caractérisé en ce qu'**une soupape (28) d'arrêt commutable pouvant être ajustée, par un deuxième pupitre (31) de commande, de manière à venir de sa position bloquée dans une position d'ouverture, est disposée dans la conduite (23) de retour de la conduite de courant secondaire, derrière la soupape de régulation du courant.

10. Mécanisme de direction selon les revendications 8 et 9,
**caractérisé en ce que** la soupape (32) d'arrêt commandée par la pression de retour et la soupape (28) d'arrêt commandée par le second pupitre (31) de commande sont insérées ensemble et disposées parallèlement l' une à l'autre.
